# EUROPEAN PATENT SPECIFICATION

(11) **EP 0 285 218 B1**
(45) Date of publication and mention of the grant of the patent: **21.12.1994**
(21) Application number: 88200576.2
(22) Date of filing: 25.03.1988
(51) Int. Cl.: C08G 67/02

(54) **Removal of catalyst remnants from olefin/CO copolymers**
Entfernung von Katalysatorrückständen in Olefin/CO-Kopolymeren
Elimination de résidus de catalyseurs dans les copolymères d'oléfines et du CO

(30) Priority: 27.03.1987 CH 1174/87; 27.04.1987 NL 8700987
(43) Date of publication of application: 05.10.1988
(73) Proprietor: SHELL INTERNATIONALE RESEARCH MAATSCHAPPIJ B.V., 2596 HR Den Haag (NL)
(72) Inventor: Pino, Piero, CH-8032 Zürich (CH); Venanzi, Luigi, CH-8032 Zürich (CH); Wittwer, Heinz, CH-8004 Zürich (CH); Daum, Ulrich, CH-8045 Zürich (CH); van Broekhoven, Johannes Adrianus Maria, NL-1031 CM Amsterdam (NL)

(56) References cited:
- EP-A- 0 224 304
- EP-A- 0 227 135
- EP-A- 0 283 092

## Description

The invention relates to a process for the removal of catalyst remnants from copolymers of an olefinically unsaturated compound and carbon monoxide.

High molecular weight linear copolymers of carbon monoxide with one or more olefinically unsaturated compounds (for the sake of brevity referred to as A), in which the monomer units occur in alternating order and which copolymers therefore consist of units of the general formula -CO-(A′)-, wherein A′ represents a monomer unit derived from a monomer A used, can be prepared by using palladium- or nickel-containing catalyst compositions.

The above-described copolymers have excellent mechanical properties, notably very high strength, stiffness and impact resistance. The use of the palladium- or nickel-containing compositions as catalysts has the drawback that a substantial portion of the palladium or nickel remains behind in the copolymers and cannot be removed therefrom by washing. The presence of palladium or nickel in the copolymers is undesirable for two reasons. In the first place it poses problems to the processing of the generally high-melting copolymers. This processing, e.g. injection-moulding, should be conducted in the molten state, with the material being at a temperature at least 25 °C above the crystalline melting point. The presence of palladium or nickel in the copolymers makes them uncapable of withstanding the high temperatures required during processing. Discolouring, decomposition and severe gelling of the copolymers is the result.

Therefore the object of the present invention is to achieve an attractive polymerization process which includes a step for removing catalyst remnants from olefin/carbon monoxide copolymers.

The present invention therefore relates to a process for the preparation of copolymers of carbon monoxide with one or more olefinically unsaturated compounds comprising copolymerizing a mixture of carbon monoxide and one or more olefinically unsaturated compounds using a palladium- or nickel-containing catalyst composition and removing catalyst remnants by treating the copolymers with a complexing agent for palladium or nickel which complexing agent is different from carbon monoxide and the olefinically unsaturated compounds participating in the copolymerization, characterized in that the removing treatment is carried out at a temperature of at least (T + 10) °C, in which T is the temperature, in °C, at which the copolymerization was carried out.

As used herein the term "complexing agent" thus excludes the monomers carbon monoxide and olefinically unsaturated compound participating in the copolymerization reaction.

The process of the invention involves the preparation of copolymers of carbon monoxide with one or more olefinically unsaturated compounds. Eligible olefinically unsaturated compounds that can be polymerized with carbon monoxide are both compounds which consist exclusively of carbon and hydrogen and compounds which, in addition to carbon and hydrogen, contain one or more hetero-atoms. Preference is given to copolymers of carbon monoxide with one or more olefinically unsaturated hydrocarbons. Examples of suitable hydrocarbon monomers are ethene and other α-olefins, such as propene, butene-1, hexene-1 and octene-1. The process of the invention is especially suited to be used with copolymers of carbon monxode with ethene, and with terpolymers of carbon monoxide with ethene and another olefinically unsaturated hydrocarbon, in particular propene. Preference is given to copolymers having an alternating structure as set out herein-above.

The process of the invention involves the preparation of copolymers by using a palladium- or nickel-containing catalyst composition. As palladium-containing catalyst compositions eligible for use in the copolymer preparation may be mentioned [(C₄H₉)₃P]₂PdCl₂, [(C₆H₅)₃P]₂PdCl₂, π-allyl[(C₆H₅)₃P]₂PdCl and [(C₆H₅)₃P]₄Pd.

Preference is given to the use of palladium-containing catalyst compositions based upon
a) a palladium compound,
b) an organic compound comprising at least one element chosen from the group made up of phosphorus, arsenic, antimony and nitrogen, and
c) an anion of an acid with a pKa of less than 6.

The palladium compound used in the catalyst compositions as component a) is preferably a palladium salt of a carboxylic acid and in particular palladium acetate.

As examples of compounds which can be used in the catalyst compositions as the component b) may be mentioned
1) triaryl phosphines, such as triphenyl phosphine,
   tri(2-methyl-phenyl) phosphine,
   tri(1-naphthyl) phosphine,
2) compounds of the general formula 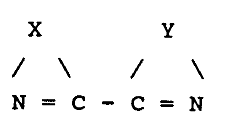 wherein X and Y represent similar or different organic bridging groups each containing three or four atoms in the bridge at least two of which are carbon atoms, such as 2,2'-bipyridine and 1,10-phenanthroline,
3) compounds in which one phosphorus atom and one or more nitrogen atoms, which atoms bear no hydrogen, are present, and in which each one of the nitrogen atoms is connected to the phosphorus atom via an organic bridging group having at least one carbon atom in the bridge, such as 2-cyano-ethyl diphenyl phosphine, tris(2-cyano-ethyl) phosphine, 2-pyridyl diphenyl phosphine, bis(2-pyridyl) phenyl phosphine, and 3-(diphenyl-phosphino)-N,N-dimethyl-propionamide,
4) compound of the general formula R₁R₂M₁-R-M₂R₃R₄, wherein M₁ is arsenic or antimony, M₂ is an element having a lower atomic number than M₁ and being chosen from the group made up of arsenic, phosphorus and nitrogen, R₁, R₂, R₃ and R₄ represent similar or different hydrocarbon groups which may or may not be substituted by polar groups and R is a bivalent bridging group having 2-4 atoms in the bridge, such as
   1-(diphenyl-phosphino),3-(diphenyl-arsino) propane,
   1-(diphenyl-phosphino),3-(diphenyl-stibino) propane,
   1-(diphenyl-arsino),3-(dimethyl-amino) propane,
   and 1-(diphenyl-phosphino),2-(diphenyl-arsino) ethane,
5) compounds of the general formula R₁R₂M-R-MR₃R₄, wherein M is an element chosen from the group made up of phosphorus, arsenic and antimony and wherein R₁, R₂, R₃ and R₄ and R have the meanings given hereinbefore under 4), such as
   1,3-bis(diphenyl-arsino) propane,
   1,3-bis(diphenyl-phosphino) propane,
   1,4-bis(diphenyl-phosphino) butane,
   1,2-bis(diphenyl-phosphino) ethane,
   1,3-bis[di(4-methoxy-phenyl)-phosphino] propane,
   2-methyl-2-(methyl-diphenyl-phosphino)-1,3-bis(diphenylphosphino) propane, and
   N,N,N′,N′-tetrakis(diphenyl-phosphino-methyl) ethylene diamine.

The compound used in the catalyst compositions as component b) is preferably a bisphosphine of the general formula (R₅)₂P-R₆-P(R₅)₂, wherein R₅ represents a polar-substituted aryl group comprising at least one polar substituent and preferably an alkoxy group, more in particular a methoxy group in a position ortho to phosphorus, and wherein R₆ represents a bivalent bridging group having three carbon atoms in the bridge. Examples of such compounds are
1,3-bis[di(2-methoxy-phenyl)phosphino] propane,
1,3-bis[di(2,4-dimethoxy-phenyl)phosphino] propane,
1,3-bis[di(2,6-dimethoxy-phenyl)phosphino] propane, and
1,3-bis[di(2,4,6-trimethyl-phenyl)phosphino] propane.

The preferred component c) used in the catalyst compositions is an anion of an acid with a pKa of less than 4 (determined in aqueous solution at 18 °C) and in particular an anion of an acid with a pKa of less than 2. Special preference is given to an anion of a sulphonic acid, such as para-toluenesulphonic acid, or an anion of a carboxylic acid, such as trifluoro acetic acid. Component c) may be incorporated in the catalyst compositions in the form of an acid and/or as a salt. Eligible salts are inter alia non-noble transition metal salts such as copper, nickel, chromium, iron, vanadyl, zirconium, uranyl and cerium salts and main group metal salts such as aluminium, tin and antimony salts. Halides suitable for use as components c) in the catalyst compositions are the halides of tin and germanium. Instead of metal salts, quaternary phosphonium salts, such as methyl triphenylphosphonium para-tosylate, may also be used as the components c) in the catalyst compositions.

If desired, components a) and c) may be used in the catalyst compositions combined in a single compound. An example of such a compound is the complex Pd(CH₃CN)₂(O₃S-C₆H₄-CH₃)₂, which can be prepared by reacting palladium chloride with the silver salt of para-toluenesulphonic acid in acetonitrile as the solvent. The components b) and c), too, may be used combined in a single compound. Compounds suitable for the purpose are sulphonic acids of the general formula R₇R₈P-R₉-SO₃H, wherein R₇ and R₈ represent similar or different hydrocarbon groups which may or may not be substituted with polar groups and R₉ is a bivalent bridging group having 1-4 carbon atoms in the bridge, such as ortho-(diphenyl-phosphino)benzenesulphonic acid, 2-(diphenyl-phosphino)ethanesulphonic acid, 3-(diphenyl-phosphino)propanesulphonic acid.

In addition to components a), b) and c) or combinations thereof, the catalyst compositions may contain promoters. Examples of suitable promoters are peroxides such as di-tert.butyl peroxide, aliphatic nitro-compounds, such as 1-nitro-propane, organic nitrites, such as butyl nitrite, aromatic nitro-compound, such as nitro-benzene, 4-isopropylnitro benzene, 3,4-dichloro-nitro benzene, 3-(trifluoro-methyl)-nitro benzene and 4-methyl-1,3-dinitro benzene, quinones, such as 1,4-benzoquinone and tetramethyl 1,4-benzoquinone, ethers, such as tetrahydrofuran, crown ethers, such as 18 crown 6 and 15 crown 5, esters, such as ethylene glycol diacetate, and ketones, such as acetone. A preferred promoter is a 1,4-quinone, such as 1,4-benzoquinone or 1,4-naphthoquinone Particularly preferred is the application of 1,4-naphthoquinone as promoter, since the investigation has shown that in comparison with 1,4-benzoquinone, much smaller amounts suffice to achieve similar activity increases. Alkyl-substituted 1,4-naphthoquinone can also be used instead of 1,4-naphthoquinone If a 1,4-naphthoquinone which may or may not be alkyl-substituted is taken up in the present palladium-containing catalyst compositions as a promoter, the quantity used thereof is preferably 10-1000 mol and in particular 25-250 mol per gram atom of palladium.

The quantity of palladium-containing catalyst composition used in the copolymer preparation may vary within wide ranges. Per mol of olefinically unsaturated compound to be polymerized, such a quantity of catalyst composition is preferably used as to contain 10⁻⁷-10⁻³ gram atom of palladium. The copolymerization is preferably carried out at a temperature of 20-100 °C and a pressure of 1-200 bar and in particular at a temperature of 30-90 °C and a pressure of 20-100 bar. The molar ratio of the olefinically unsaturated compounds relative to carbon monoxide is preferably 10:1-1:5 and in particular 5:1-1:5.

Useful nickel-containing catalysts are, e.g. complexes of nickel carbonyls or nickel cyanides with tertiary amines.

The copolymerization is typically carried out by contacting the monomers with a solution of the palladium-containing catalyst composition in an organic liquid in which the copolymers are insoluble. If desired, the copolymerization may be executed in the gaseous phase.

In the process of the invention, the copolymers are treated with a complexing agent for palladium or nickel at a temperature which lies at least 10 °C higher than the temperature at which the copolymers have been prepared. The treatment of the copolymers with the complexing agent is preferably carried out in an organic liquid in which the copolymers are insoluble and in which the palladium complex formed is soluble. Suitable organic liquids are lower alcohols, such as methanol and ethanol. Thus, the product obtained is a copolymer having a reduced palladium or nickel content and therefore better thermal stability. In addition, a palladium- or nickel-containing solution is obtained from which the metal complex formed can be separated. Through the decomposition of the latter, the palladium or nickel can be recovered and subsequently serve to prepare a composition that can be used as copolymerization catalyst.

If desired, the treatment of the copolymers with the complexing agent may also be carried out in an organic liquid in which both the copolymers and the complex formed are soluble. To this end the copolymers may be dissolved, for instance in hexafluoroisopropanol, and after the copolymers are treated with the complexing agent, the copolymers may be separated from the solution by the addition of an organic liquid in which the copolymers are insoluble and the metal complex formed is soluble, such as methanol or tetrahydrofuran.

The quantity of complexing agent with which the copolymers are treated in the process of the invention is preferably at least 0.25 mol per gram atom of palladium or nickel present in the copolymers. Special preference is given to the use of at least 0.5 mol and more in particular to the use of at least 1 mol of the complexing agent per gram atom of metal present in the copolymers. The copolymers are preferably treated with the complexing agent at a temperature of 150-200 °C.

The preferred complexing agents are compounds containing at least one element chosen from the group made up of phosphorus, arsenic, antimony and nitrogen. In addition to the compounds mentioned hereinbefore under 1)-5) as possible catalyst components b), which are in principle all eligible for use as complexing agents in the reduction of the palladium contents of the copolymers of the invention, nitrogen-containing compounds, such as triethyl amine, naphthyl amine, aniline, pyridine, ethylene diamine and ethylene diamine tetraacetic acid, are also suitable for the purpose. Other complexing agents for palladium which can very suitably be used in the process of the invention are carboxylates, such as acetates, cyanides, thiocyanates and acetyl acetonates. A preferred group of complexing agents comprises compounds having the general formula R₁₀R₁₁N-C(X₁)-X₂-Y, wherein R₁₀ and R₁₁, which may be similar or different, represent hydrogen or a hydrocarbon group, wherein X₁ and X₂, which may be similar or different, represent oxygen or sulphur and wherein Y represents hydrogen or alkali metal. An example of such a compound is the sodium salt of N,N-diethyl-dithiocarbamic acid. Another preferred group of complexing agents comprises triaryl phosphines, such as triphenyl phosphine, trialkyl amines, such as triethyl amine and compounds of the general formula (R₁₂)₂P(CH₂)₃-P(R₁₂)₂, wherein R₁₂ represents an aryl group which may or may not be polar-substituted, such as
1,3-bis(diphenyl-phosphino) propane and
1,3-bis[di(2-methoxy-phenyl)phosphino] propane.

As stated hereinbefore, the copolymerization is typically carried out in an organic liquid in which the catalyst composition is soluble but in which the copolymers are insoluble. Very suitable liquids are lower alcohols, such as methanol and ethanol. During the copolymerization, the copolymers are obtained as a suspension in the organic liquid. After the required degree of copolymerization is reached, the copolymerization can be terminated by cooling and releasing the pressure. The copolymers can be isolated from the suspension by filtration, washing and drying. The reduction of the palladium contents of the copolymers according to the invention can be effected by suspending the copolymers thus prepared once again and treating this suspension with the complexing agent for palladium. It is to be preferred, however, to add the complexing agent to the reaction mixture at the moment when the desired degree of copolymerization is reached. As stated hereinbefore, this addition brings the copolymerization to a stand. The termination of the copolymerization by the addition of the complexing agent to the reaction mixture provides a considerable advantage over the conventional method of terminating the copolymerization by gradually cooling the mixture and releasing the pressure. It has been found that during cooling and pressure reduction the copolymerization proceeds at a lower rate while forming a copolymer material of a considerably higher molecular weight. The formation of this material is undesirable for two reasons. On the one hand, the copolymerization aims at producing copolymers of a given molecular weight, whilst the above consecutive reaction contaminates the product with copolymers of different molecular weights. On the other hand, the formation of copolymers of an undesirable, excessively high molecular weight gives rise to clogging of the equipment.

The invention will now be illustrated with the aid of the following Examples.

### EXAMPLE 1

A carbon monoxide/ethene/propene terpolymer was prepared as follows. A mechanically stirred autoclave of 300 ml capacity was charged with 200 ml of methanol. Any air present in the autoclave was removed therefrom by pressurizing the autoclave with carbon monoxide until a pressure of 50 bar was reached and then releasing the pressure, and repeating this procedure two more times. After the contents of the autoclave had been brought to 85 °C, carbon monoxide was introduced until a pressure of 30 bar was reached, followed by propene until a pressure of 40 bar was reached and finally ethene until a pressure of 56 bar was reached. Next, the autoclave was charged with a catalyst solution comprising
4.5 ml of methanol,
1.5 ml of toluene,
0.01 mmol of palladium acetate,
0.012 mmol of 1,3-bis[di(2-methoxy-phenyl)phosphino] propane, and 0.2 mmol of trifluoro acetic acid.

The pressure was maintained at 56 bar by introducing a 1:1 carbon monoxide/ethene mixture. After 4 hours, copolymerization was terminated by cooling the reaction mixture to room temperature and releasing the pressure. The terpolymer was filtered off, washed with 200 ml of methanol had dried at 70 °C. 29 g of terpolymer having a palladium content of 24 ppmw was obtained, which means that 67% of the palladium present in the catalyst had remained behind in the terpolymer. The copolymerization rate was 6800 g terpolymer/g palladium/hour.

### EXAMPLE 2

A carbon monoxide/ethene/propene terpolymer was prepared substantially in the same manner as the terpolymer of Example 1, the difference being that the copolymerization was terminated after 3 hours by pumping a solution of 0.08 mmol of triphenyl phosphine in 6 ml of methanol into the autoclave. After 15 minutes the reaction mixture was cooled to room temperature and the pressure was released. The terpolymer was filtered off, washed with methanol and dried at 70 °C. 20 g of terpolymer having a palladium content of 10 ppmw was obtained, which means that 20% of the palladium present in the catalyst had remained behind in the terpolymer.

### EXAMPLE 3

A carbon monoxide/ethene/propene terpolymer was prepared substantially in the same manner as the terpolymer of Example 2, the difference being that after the triphenyl phosphine solution had been pumped into the autoclave, the temperature was raised to 110 °C and the reaction mixture was kept at that temperature for 15 minutes. 22 g of terpolymer having a palladium content of 4.9 ppmw was obtained, which means that 11% of the palladium present in the catalyst had remained behind in the terpolymer.

### EXAMPLE 4

A carbon monoxide/ethene/propene terpolymer was prepared substantially in the same manner as the terpolymer of Example 1, the difference being that the copolymerization was terminated after 2 hours by pumping a solution of 0.012 mmol of 1,3-bis[di(2-methoxyphenyl)phosphino] propane in a mixture of 4.5 ml of methanol and 1.5 ml of toluene into the autoclave. After 15 minutes the reaction mixture was cooled to room temperature and the pressure was released. The terpolymer was filtered off, washed with methanol and dried at 70 °C. 11 g of terpolymer having a palladium content of 55 ppmw was obtained, which means that 60% of the palladium present in the catalyst had remained behind in the terpolymer.

### EXAMPLE 5

A carbon monoxide/ethene/propene terpolymer was prepared substantially in the same manner as the terpolymer of Example 4, the difference being that after the bisphosphine solution had been pumped into the autoclave, the temperature was raised to 110 °C and the reaction mixture was kept at that temperature for 15 minutes. 10 g of terpolymer having a palladium content of 5.2 ppmw was obtained, which means that 5% of the palladium present in the catalyst had remained behind in the terpolymer.

### EXAMPLE 6

A carbon monoxide/ethene/propene terpolymer was prepared substantially in the same manner as the terpolymer of Example 1, except for the following differences
a) the reaction temperature was 65 °C instead of 85 °C,
b) the catalyst solution comprised 6 ml of methanol instead of a mixture of 4.5 ml of methanol and 1.5 ml of toluene, and 0.012 mmol of 1,3-bis(diphenylphosphino) propane instead of 1,3-bis[di-(2-methoxy-phenyl)phosphino] propane, and
c) the copolymerization was terminated after 18 hours instead of 4 hours by cooling to room temperature and releasing the pressure.
11 g of terpolymer having a palladium content of 88 ppmw was obtained, which means that 86% of the palladium present in the catalyst had remained behind in the terpolymer.

### EXAMPLE 7

A carbon monoxide/ethene/propene terpolymer was prepared substantially in the same manner as the terpolymer of Example 6, the difference being that the copolymerization was terminated after 20 hours by pumping a solution of 0.012 mmol of 1,3-bis(diphenylphosphino) propane in 6 ml of methanol into the autoclave. After 15 minutes the reaction mixture was cooled to room temperature and the pressure was released. The terpolymer was filtered off, washed with methanol and dried at 70 °C. 15 g of terpolymer having a palladium content of 49 ppmw was obtained, which means that 70% of the palladium present in the catalyst had remained behind in the terpolymer.

### EXAMPLE 8

A carbon monoxide/ethene/propene terpolymer was prepared substantially in the same manner as the terpolymer of Example 7, the difference being that after the bisphosphine solution had been pumped into the autoclave, the temperature was raised to 110 °C and the reaction mixture was kept at that temperature for 15 minutes. 13 g of terpolymer having a palladium content of 4.8 ppmw was obtained, which means that 6% of the palladium present in the catalyst had remained behind in the terpolymer.

### EXAMPLE 9

A carbon monoxide/ethene/propene terpolymer was prepared substantially in the same manner as the terpolymer of Example 1, the difference being that the copolymerization was terminated after 2.5 hours by pumping a solution of 0.14 mmol of triethyl amine in 6 ml of methanol into the autoclave. After 15 minutes the reaction mixture was cooled to room temperature and the pressure was released. The terpolymer was filtered off, washed with methanol and dried at 70 °C. 8.8 g of terpolymer having a palladium content of 52 ppmw was obtained, which means that 46% of the palladium present in the catalyst had remained behind in the terpolymer.

### EXAMPLE 10

A carbon monoxide/ethene/propene terpolymer was prepared substantially in the same manner as the terpolymer of Example 9, the difference being that after the triethyl amine solution had been pumped into the autoclave, the temperature was raised to 110 °C and the reaction mixture was kept at that temperature for 15 minutes. 10 g of terpolymer having a palladium content of 37 ppmw was obtained, which means that 35% of the palladium present in the catalyst had remained behind in the terpolymer.

Example 3, 5, 8 and 10 are examples according to the invention. In these examples copolymers of carbon monoxide with two olefinically unsaturated compounds were prepared by using a palladium-containing catalyst composition and the palladium-containing copolymers thus prepared were treated with a complexing agent for palladium at a temperature which was more than 10 °C higher than the temperature at which the copolymers were prepared, which resulted in reduction of the palladium contents of the copolymers. The favourable influence which the use of a higher temperature according to the invention during the treatment of the copolymers with the complexing agent for palladium exerts on the percentage of palladium remaining behind in the copolymer is clearly demonstrated by the comparison of the results of the following four series of three examples, in which each series comprises a succession of an examples in which no complexing agent was used, an example in which a complexing agent was used at the same temperature as the copolymerization temperature, and an example in which a complexing agent was used at a higher temperature than the copolymerization temperature, according to the invention.
- Series 1:: Example 1 (67%), Example 2 (20%) and Example 3 (11%),
- Series 2:: Example 1 (67%), Example 4 (60%) and Example 5 (5%),
- Series 3:: Example 6 (86%), Example 7 (70%) and Example 8 (6%),
- Series 4:: Example 1 (67%), Example 9 (46%) and Example 10 (35%).

Examples 1,2 4, 6, 7 and 9 lie outside the scope of the invention. They have been included in the patent application for comparison.

It was established with the aid of ¹³C-NMR analysis that the carbon monoxide/ethene/propene terpolymers prepared according to Examples 1-10 had a linear structure and that they consisted therefore of units of the formula -CO(C₂H₄)- and of units of the formula -CO-(C₃H₆)-, which units occurred distributed randomly within the terpolymer.

### EXAMPLE 11

3 g of alternating ethylene/carbon monoxide copolymer (melting point 250 °C), obtained at a copolymerization temperature of 60 °C by using HPd(CN)₃ as catalyst, were purified by dissolving the copolymer in 500 cm³ of hexafluoroisopropanol and, after centrifugation to separate any metal particles, by precipitating it by adding 2.5 litres of methanol. The dry reference copolymer contained, according to analysis by X-ray fluorescene, 3000 ppm of palladium.

500 mg of alternating ethylene/carbon monoxide copolymer thus obtained were suspended in 12 cm³ of water.

To the suspension 100 mg of sodium N,N-diethyldithiocarbamate were added. The mixture was heated in an autoclave at 180 °C for 5 hours and 45 minutes. After cooling, the copolymer was filtered, washed with water and vacuum-dried at ambient temperature. Palladium content was 1770 ppm.

### EXAMPLE 12

Example 11 was repeated, using 4 cm³ of water and with heat being applied at 200 °C for 3 hours. The copolymer's palladium content was 1364 ppm.

### EXAMPLE 13

Example 11 was repeated, using, instead of water, 4 cm³ of ethanol and with heat being applied at 200 °C for 10 hours. The copolymer's palladium content was 831 ppm.

### EXAMPLE 14

200 mg of alternating ethylene/carbon monoxide copolymer, prepared as described in Example 11 containing 3000 ppm metallic palladium, were suspended in 4 cm³ of water.

10 mg of sodium N,N-diethylcarbamate were added and the suspension was heated in an autoclave at 200 °C for 30 minutes. The copolymer was subsequently treated as in Example 11. The palladium content was 753 ppm.

## Claims

1. Process for the preparation of copolymers of carbon monoxide with one or more olefinically unsaturated compounds comprising copolymerizing a mixture of carbon monoxide and one or more olefinically unsaturated compounds using a palladium- or nickel-containing catalyst composition and removing catalyst remnants by treating the copolymers with a complexing agent for palladium or nickel which complexing agent is different from carbon monoxide and the olefinically unsaturated compounds participating in the copolymerization, characterized in that the removing treatment is carried out at a temperature of at least (T + 10) °C, in which T is the temperature, in °C, at which the copolymerization was carried out.

2. Process as claimed in claim 1, characterized in that the catalyst composition comprises
a) a palladium compound,
b) an organic compound comprising at least one element chosen from the group made up of phosphorus, arsenic, antimony and nitrogen, and
c) an anion of an acid with a pKa of less than 6.

3. Process as claimed in claim 1 or 2 characterized in that the copolymers are treated with the complexing agent in the presence of an organic liquid in which the copolymers are insoluble and the palladium or nickel complex formed is soluble, such as methanol.

4. Process as claimed in any of claims 1 to 3, characterized in that the copolymers are treated with the complexing agent at a temperature of 150 to 200 °C.

5. Process as claimed in any of claims 1 to 4, characterized in that as complexing agent for palladium an organic compound is used that comprises at least one element chosen from the group made up of phosphorus, arsenic, antimony and nitrogen.

6. Process as claimed in claims 1 to 5, characterized in that the complexing agent for palladium used is a compound chosen from the group made up of triaryl phosphines, such as triphenyl phosphine, trialkyl amines, such as triethyl amine and compounds of the general formula (R₁₂)₂P-(CH₂)₃-P(R₁₂)₂, wherein R₁₂ represents an aryl group which may or may not be polar substituted, such as 1,3-bis(diphenyl-phosphino)propane and 1,3-bis[di(2-methoxy-phenyl)phosphino]propane.

7. Process as claimed in claim 5, characterized in that the complexing agent is a compound having the formula 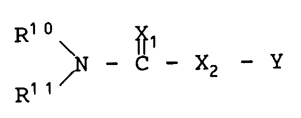 where X₁ and X₂ are each independently oxygen or sulphur and R¹⁰ and R¹¹ are each independently hydrogen, alkyl or aryl and Y is hydrogen or alkaline metal.

8. Process as claimed in claim 7, characterized in that the complexing agent is sodium N,N-diethyldithiocarbamate.

9. Process as claimed in any of claims 1 to 8, characterized in that the copolymer is an alternating ethylene/carbon monoxide copolymer.

## Patentansprüche

1. Verfahren zur Herstellung von Copolymeren aus Kohlenmonoxid und einer oder mehreren ungesättigten Verbindung(en), umfassend das Copolymerisieren einer Mischung aus Kohlenmonoxid und einer oder mehreren ungesättigten Verbindung(en) unter Verwendung einer Palladium oder Nickel enthaltenden Katalysatorzusammensetzung, und das Entfernen von Katalysatorrückständen durch Behandeln der Copolymeren mit einem Komplexierungsmittel für Palladium oder Nickel, welches Komplexierungsmittel sich von Kohlenmonoxid und den an der Copolymerisierungsreaktion teilnehmenden olefinisch ungesättigten Verbindungen unterscheidet, dadurch gekennzeichnet, daß die Entfernungsbehandlung bei einer Temperatur von mindestens (T+10)°C durchgeführt wird, wobei T die Temperatur in °C ist, bei welcher die Copolymerisierung stattgefunden hat.

2. Ein Verfahren wie in Anspruch 1 beansprucht, dadurch gekennzeichnet, daß die Katalysatorzusammensetzung die folgenden Komponenten umfaßt:
a) eine Palladiumverbindung,
b) eine organische Verbindung, welche mindestens ein Element umfaßt, das ausgewählt ist aus der Gruppe, die aus Phosphor, Arsen, Antimon und Stickstoff besteht, und
c) ein Anion einer Säure mit einem ptKa-Wert von weniger als 6.

3. Verfahren wie in Anspruch 1 oder 2 beansprucht, dadurch gekennzeichnet, daß die Copolymere mit dem Komplexierungsmittel in Anwesenheit einer organischen Flüssigkeit behandelt werden, in welcher die Copolymere unlöslich sind und der gebildete Komplex von Palladium oder Nickel löslich ist, wie Methanol.

4. Verfahren wie in irgendeinem der Ansprüche 1 bis 3 beansprucht, dadurch gekennzeichnet, daß die Copolymere bei einer Temperatur im Bereich von 150 bis 200°C mit dem Komplexierungsmittel behandelt werden.

5. Verfahren wie in irgendeinem der Ansprüche 1 bis 4 beansprucht, dadurch gekennzeichnet, daß als Komplexierungsmittel für Palladium eine organische Verbindung verwendet wird, welche mindestens ein Element enthält, welches ausgewählt ist aus der Gruppe, die aus Phosphor, Arsen, Antimon und Stickstoff besteht.

6. Ein Verfahren wie in irgendeinem der Ansprüche 1 bis 5 beansprucht, dadurch gekennzeichnet, daß das Komplexierungsmittel für Palladium eine Verbindung ist, welche ausgewählt ist aus der Gruppe, die aus Triarylphosphinen, wie Triphenylphosphin, Trialkylaminen, wie Triethylamin, und Verbindungen der allgemeinen Formel (R₁₂)₂P-(CH₂)₃-P(R₁₂)₂ besteht, in welcher Formel R₁₂ eine gegebenfalls polarsubstituierte Arylgruppe bedeutet, wie beispielsweise die Verbindung 1,3-Bis(diphenyl-phosphino)propan und 1,3-Bis[di(2-methoxy-phenyl)phosphino]propan.

7. Verfahren wie in Anspruch 5 beansprucht, dadurch gekennzeichnet, daß das Komplexierungsmittel eine Verbindung mit der nachstehenden Formel ist: 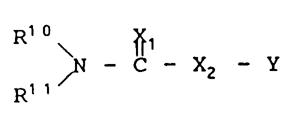 in welcher X₁ und X₂ unabhängig voneinander Sauerstoff oder Schwefel bedeuten und R¹⁰ und R¹¹ unabhängig voneinander Wasserstoff, Alkyl oder Aryl darstellen und Y Wasserstoff oder ein Alkalimetall ist.

8. Verfahren wie in Anspruch 7 beansprucht, dadurch gekennzeichnet, daß das Komplexierungsmittel Natrium-N,N-diethyldithiocarbamat ist.

9. Verfahren wie in irgendeinem der Ansprüche 1 bis 8 beansprucht, dadurch gekennzeichnet, daß das Copolymer ein Copolymer aus Kohlenmonoxid und Ethen mit alternierender Struktur ist.

## Revendications

1. Procédé pour la préparation de polymères du monoxyde de carbone avec un ou plusieurs composés oléfiniquement insaturés, comprenant la copolymérisation d'un mélange de monoxyde de carbone et d'un ou plusieurs composés oléfiniquement insaturés en utilisant une composition catalytique contenant du palladium ou du nickel et l'élimination des résidus de catalyseur par traitement des copolymères avec un agent complexant pour le palladium ou le nickel, lequel agent complexant est différent du monoxyde de carbone et des composés oléfiniquement insaturés participant à la copolymérisation, caractérisé en ce que le traitement d'élimination est effectué à une température d'au moins (T + 10) °C, où T est la température, en °C, à laquelle la copolymérisation a été effectuée.

2. Procédé selon la revendication 1, caractérisé en ce que la composition catalytique comprend
a) un composé du palladium,
b) un composé organique comprenant au moins un élément choisi dans le groupe constitué par le phosphore, l'arsenic, l'antimoine et l'azote, et
c) un anion d'un acide d'un pKa de moins de 6.

3. Procédé selon la revendication 1 ou 2, caractérisé en ce que les copolymères sont traités avec l'agent complexant en présence d'un liquide organique dans lequel les copolymères sont insolubles et le complexe de palladium ou de nickel formé est soluble, comme le méthanol.

4. Procédé selon l'une quelconque des revendications 1 à 3, caractérisé en ce que les copolymères sont traités avec l'agent complexant à une température de 150 à 200°C.

5. Procédé selon l'une quelconque des revendications 1 à 4, caractérisé en ce que, comme agent complexant pour le palladium,on utilise uncomposé organique qui comprend au moins un élément choisi dans le groupe constitué par le phosphore, l'arsenic, l'antimoine et l'azote.

6. Procédé selon les revendications 1 à 5, caractérisé en ce que l'agent complexant pour le palladium est un composé choisi dans le groupe constitué par les triaryl phosphines, telles que la triphényl phosphine, les trialcoyl amines, telles que la triéthyl amine, et les composés de la formule générale (R₁₂)₂P-(CH)₂)₃-P(R₁₂)₂, où R₁₂ représente un groupe aryle qui peut être ou ne pas être substitué par un ou des groupes polaires, comme le 1,3-bis(diphényl-phosphino)propane et le 1,3-bis(di(2-méthoxy-phényl)phosphino)propane.

7. Procédé selon la revendication 5, caractérisé en ce que l'agent complexant est un composé ayant la formule 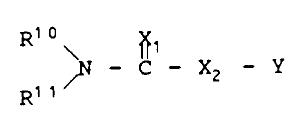 ou X₁ et X₂ sont chacun indépendamment l'oxygène ou le soufre et R¹⁰ et R¹¹ sont chacun indépendamment l'hydrogène ou un groupe alcoyle ou aryle et Y est l'hydrogène ou un métal alcalin.

8. Procédé selon la revendication 7, caractérisé en ce que l'agent complexant est le N,N-diéthyldithiocarbamate de sodium.

9. Procédé selon l'une quelconque des revendications 1 à 8, caractérisé en ce que le copolymère est un copolymère alterné éthylène/monoxyde de carbone.
